# EUROPEAN PATENT APPLICATION

(11) **EP 3 650 730 A1**
(43) Date of publication of application: **13.05.2020**
(21) Application number: 18205351.2
(22) Date of filing: 09.11.2018
(51) Int. Cl.: F16F 15/02, G10K 11/04, G10K 11/18

(54) **MONOLITHIC BROADBAND ULTRASONIC VIBRATION ISOLATION WITH SMALL FORM FACTOR**

(71) Applicant: Universität Wien, 1010 Vienna (AT)
(72) Inventor: Riedinger, Ralf, 1090 Wien (AT); Dragosits, Mathias, 1090 Wien (AT)
(74) Representative: Grünecker Patent- und Rechtsanwälte PartG mbB

(57) **Abstract**

Monolithic phononic crystal for vibration isolation comprising: a two-dimensional array of a plurality of resonant masses, said resonant masses being connected by bridges; wherein transition regions between bridges and resonant masses have a concave shape in the plane of the two-dimensional array, respectively; wherein the resonant masses each have convex edges in the plane of the two-dimensional array; wherein the bridges are recessed with respect to the thickness of the resonant masses.

## Description

### Field of the Invention

The present invention relates to the field of vibration isolation systems and phononic crystals.

### Background of the Invention

Phononic crystals are periodic arrays of identical unit cells with local resonances in order to create a band gap intended to prevent propagation of sound at selected frequencies. The phononic crystal typically is a regular pattern of smaller elements, which provide a complete band gap in the ultrasonic frequency regime. The lack of available modes prevents vibrations of frequencies within the bandgap to travel through the device.

For phononic crystals, see: Yan Pennec and Bahram Djafari-Rouhani, "Introduction to the Concept of Phononic Crystals and Their Band Structures", in A. Khelif, A. Adibi (eds.), Phononic Crystals, Springer New York 2016. Phononic metamaterials and phononic crystals are also described, e.g., in US8833510 B2 or WO 2017/186765 A1.

Alternative vibration isolations systems may comprise low frequency springs and/or negative stiffness vibration isolations systems, e.g. Minus K technology by Minus K® Technology, Inc. As they involve low frequency mechanics, these systems tend to have large form factors. Many of these systems only work in a specific orientation, i.e. since gravity needs to be taken into account for low frequencies, and these systems typically need alignment, which increases production costs. In addition, these systems typically require large springs with small cross-sections, which reduce thermal conductivity. This may be critical, in particular, in vacuum systems, where air cannot contribute to the thermal anchoring of the vibrationally isolated object.

Further alternative systems may comprise elastomer-based dampers. While these systems may exhibit a rather small form factor, they are typically not monolithic and have lower thermal conductivity. Furthermore, most elastomers would not be suitable for applications in vacuum systems, and none of them would be suitable for cryogenic applications.

### Summary of the Invention

In view of the above, the present invention provides an alternative solution to the above-mentioned limitations.

The present invention provides a monolithic phononic crystal for vibration isolation comprising: a two-dimensional array of a plurality of resonant masses, said resonant masses being connected by bridges; wherein transition regions between bridges and resonant masses have a concave shape in the plane of the two-dimensional array, respectively; wherein the resonant masses each have convex edges in the plane of the two-dimensional array; wherein the bridges are recessed with respect to the thickness of the resonant masses.

Here the term monolithic phononic crystal should imply that the phononic crystal is manufactured from one single structure of material. It comprises a systematic arrangement of similar objects, i.e. similar single structures usually in rows and columns.

The device, i.e. the phononic crystal, is monolithic and thus does not depend on the mounting orientation and does not require any alignment. By appropriate choice of material, the thermal conductivity of the device may be selected to be much larger than in comparable systems, even in vacuum and at cryogenic temperatures. Optimized design of the device's geometry may result in broadband isolation, e.g. more than one octave, and a small form factor.

The transition regions between bridges and resonant masses have a concave shape in the plane of the two-dimensional array. These transition regions may also be termed as concave edges. The curvature of said concave edges may be optimized thereby increasing the reliability of the band gap of the manufactured device.

Further, the curvature of the convex edges in the plane of the two-dimensional array may be optimized thereby optimizing the width of the band gap.

In the monolithic phononic crystal, the resonant masses may be rectangular-shaped parallelepipeds.

A rectangular-shaped parallelepiped may also be called a rectangular cuboid or right cuboid. It should be understood for the purpose of this specification that each of the faces of the parallelepiped is a rectangle, thus each pair of adjacent faces meets in a right angle, respectively.

In the monolithic phononic crystal, the resonant masses may be at least partly rotationally symmetric around a principle axis of inertia of the respective resonance mass; and the resonant masses each may extend along said principle axis with a predefined thickness.

In the monolithic phononic crystal, each resonant mass of the plurality of resonant masses may be connected by four bridges with four other resonant masses, respectively.

The bridges, which may also be termed tethers, may have a rectangular cross-section adopted to the need of the respective application. Other shapes of the cross-section of the bridges may be possible. These bridges may act as springs for the array of resonant masses, i.e. acting as damping elements for the system comprising resonant masses and bridges, respectively. The cross section of the tethers, i.e. the thin damping parts of the unit cells may be optimized thereby optimizing the width of the band gap.

In the monolithic phononic crystal, the height of the bridges in the thickness direction may be 5 to 95% of the thickness of the resonance masses, respectively.

The monolithic phononic crystal may be made of one of aluminum, copper, stainless steel, invar, brass, nickel, titanium, sapphire or silicon, and the resonance masses may comprise a width in the range of 1 to 100 mm, a thickness in the range of 1 to 100 mm, a radius of concave curvatures in the range of 0.5 to 10 mm, radius of convex curvatures in the range of 0 to 50 mm, width of the bridges in the range of 0.5 to 25 mm, length of bridges in the range of 1 to 50 mm.

The invention also provides a vibration isolation comprising a monolithic phononic crystal as described above.

The vibration isolation may further comprise a sample mount located in the center of the phononic crystal; and a support frame surrounding the phononic crystal and made from the same material as the phononic crystal.

The vibration isolation system may further comprise a plurality of sample mounts located within the phononic crystal; and a plurality of support structures at one or more ends of the phononic crystal and made from the same material as the phononic crystal.

In particular, the vibration isolation system may further comprise one or more sample mounts located on one or more ends of a plurality of two-dimensional arrays, respectively, and a support mount connected to one or more other ends of the arrays made from the same material.

The invention also provides a method of manufacturing a monolithic phononic crystal, the method comprising the steps of: i) providing a pre-defined two-dimensional array of a plurality of resonant masses, said resonant masses being connected by bridges; and transition regions between bridges and resonant masses have a concave shape, respectively; wherein the resonant masses each have convex edges in the plane of the two-dimensional array; the bridges being recessed with respect to the thickness of the resonant masses; ii) measuring vibration isolation parameters of said pre-defined two-dimensional array of the plurality of resonant masses, and extracting the measured vibration isolation parameters; iii) comparing the extracted measured vibration isolation parameters with pre-defined target isolation parameters; iv) starting from the measured vibration isolation parameters, optimizing one or more of the following parameters: radius of curvature of the concave regions, radius of curvature of the convex regions, length of the bridges, size of the cross-section of the bridges, thickness of the resonance masses, recess of the bridges with respect to the thickness of the resonant masses; v) providing modified parameters of a modified two-dimensional array of a plurality of modified resonant masses and manufacturing said modified two-dimensional array; vi) verifying the parameters of the modified two-dimensional array; and in case the parameters are not within a predefined range of the respective target parameters, returning to step iv) else vii) extracting the modified parameters for production.

The method as described above may further comprise a step of computer numerical control, CNC, milling of the monolithic phononic crystal according to the extracted modified parameters of step vii).

In the method as described above the resonant masses may be rectangular-shaped parallelepipeds.

In the method as described above the resonant masses may be at least partly rotationally symmetric around a principle axis of inertia of the respective resonance mass; and the resonant masses each may extend along said principle axis with a predefined thickness.

In the method as described above each resonant mass of the plurality of resonant masses may be connected by four bridges with four other resonant masses, respectively.

In the method as described above the height of the bridges in the thickness direction may be 5 to 95% of the thickness of the resonance masses

The above and other aspects, features and advantages of the present invention will become more apparent from the following detailed description when taken in conjunction with the accompanying drawings.

### Brief Description of the Drawings

- Figure 1:: Schematic top view of a unit cell of a phononic crystal according to the present disclosure.
- Figure 2A:: Schematic stereoscopic side view of the unit cell of Fig. 1 according to the present disclosure.
- Figure 2B: The unit cell as Fig. 2A but shown without bridges for illustrative purposes.
- Figure 3: Schematic top view of a phononic crystal including an array of unit cells according to the present disclosure.
- Figure 4A: Vibration isolation system with the phononic crystal of Fig. 3 according to the present disclosure.
- Figure 4B: A slight modification of a vibration isolation system of Fig. 4A according to the present disclosure.
- Figure 4C: Schematic depiction of another slight modification of the vibration isolation system of Fig. 4A according to the present disclosure.
- Figure 4D: Yet another slight modification of the vibration isolation system according to Fig. 4A according to the present disclosure.
- Figure 5: Schematic depiction of vibration isolation measurement using the vibration isolation system of Fig 3.
- Figure 6: Results of vibration isolation measurement for vibration isolation system of Fig. 5.

### Detailed Description

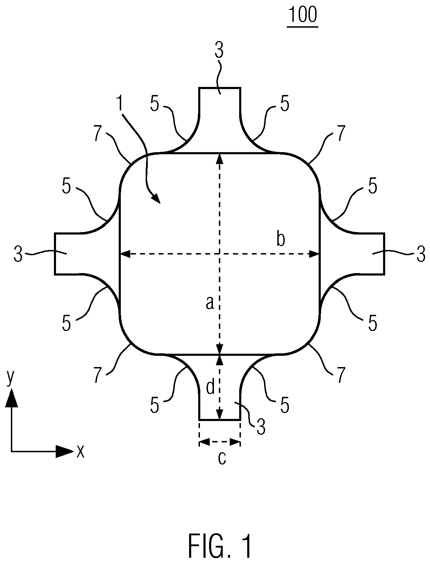

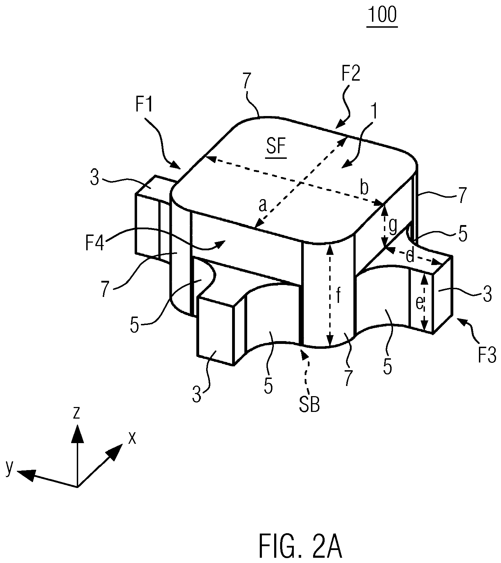

Fig. 1 depicts a schematic top view of a so-called unit cell 100 of a phononic crystal according to the present disclosure. Fig. 2A represents the corresponding stereoscopic side view of the unit cell 100 of Fig. 1. In Fig. 1, the unit cell 100 for a phononic crystal is shown. The unit cell 100 represent a single structure to be repeated in an array-like fashion for a phononic crystal. The unit cell 100 comprises a resonant mass 1, said resonant mass 1 mostly extending in a two-dimensional plane as shown in the top view of Figure. The two-dimensional plane is spanned in directions x and y as indicated by the corresponding coordinate system, it may therefore also be termed x-y plane. In the projection view of Fig. 1, the projection of resonant mass 1 exhibits the shape of a right Euclidean parallelogram, i.e. a rectangle. As is shown in Fig. 2A the resonant mass 1 is in fact a three-dimensional body and extends somewhat in a direction perpendicular to the drawing plane of Fig. 1, said direction may be called z-direction or thickness direction, thereby forming a right parallelepiped. In Fig. 1, for simplicity the projection of resonant mass 1 not only exhibits a rectangular shape but even a quadratic shape. It should be understood, however, that other shapes may be possible.

Resonant mass 1 further shows that each of its corners 7 are rounded. Each of the corners 7 of the resonant mass 1 are typically rounded by the same radius of curvature. The rounding of the corners 7 of the resonant mass 1 should be understood as generating convex corners 7 for the resonant mass 1. In view of the resonant mass 1 in fact being a three-dimensional body extending in a thickness direction z, cf. Fig. 2A, these convex corners 7 are in fact directly correspond to convex edges 7 of the resonant mass 1. In other words, the resonant masses 1 exhibit convex edges 7 in the projection plane, x-y plane, of the resonant mass 1. These convex edges 7 each extend in a direction parallel to the thickness direction, i.e. the z-direction, cf. Fig. 2A. The curvature, i.e. the radius of curvature, of the convex edges 7 of the resonant masses 1 may be optimized. E.g. it may be numerically simulated which radius is the best, thereby optimizing the width of the band gap for the vibrational spectra, when the resonant mass 1 is vibrationally excited, e.g. by external excitations.

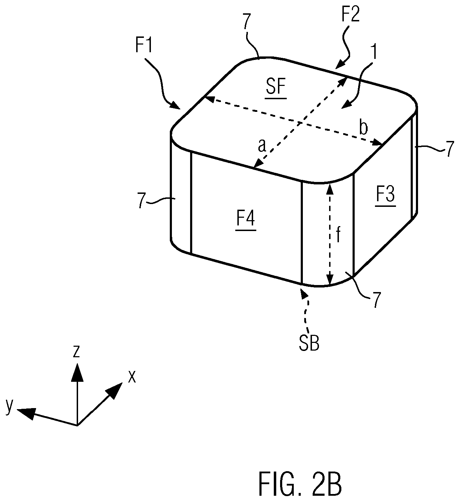

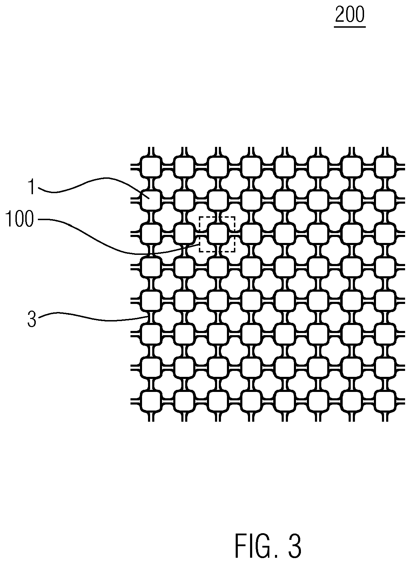

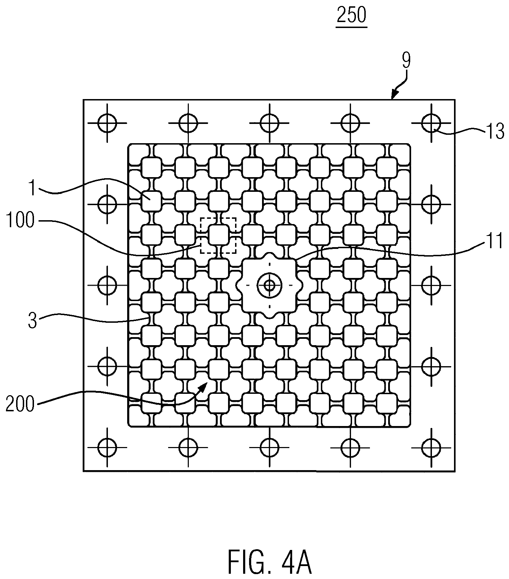

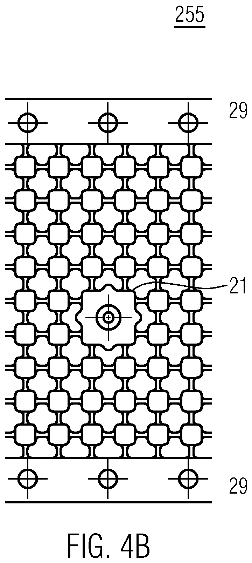

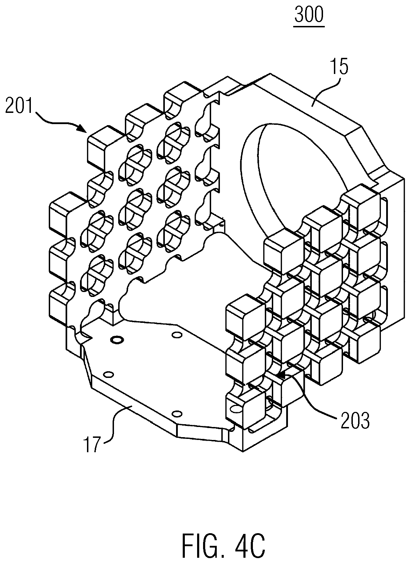

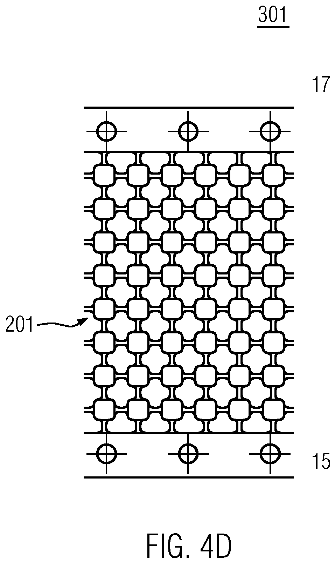

Fig. 1 further shows that resonant mass 1 has four bridges 3 at the four sides of the projection view of resonant mass 1. Each of these four bridges 3 is typically provided in middle of a side of the projection view such that all of the four bridges 3 are symmetrically provided. As indicated in Figs. 1 and 2A the sides of the projection are denoted by a and b, respectively. Sides a and b corresponding to directions x and y of the coordinate system as shown in Figs 1 and 2. Here, since the projection view shown in Fig. 1 has a quadratic shape, each of the bridges 3 is provided at half of the length of the corresponding side a or b of the projection view of the resonant mass 1, and each of said half lengths has the same magnitude, since in Figs. 1 and 2A, a and b have the same magnitude, i.e. a=b. In case the projection view of the resonant mass 1 would be merely rectangular but not quadratic, it would have two different sides, i.e. a≠b, and opposite bridges would be provided at the same half-length of a or b, respectively. Each of the bridges 3 typically is the same as the other bridges 3. The bridges 3 as shown in Figs. 1 and 2A serve to connect the resonant mass 1 with other resonant masses, cf. Figs.3 and 4, which typically are of the same kind as resonant mass 1 such that a repetitive structure is obtained. The bridges 3 may also be termed tethers or struts.

As is evident in Figs. 1 and 2A, the bridges 3 are connected to the resonant mass 1 in a smooth fashion. The transition between the bridges 3 and the resonant mass 1 is not abrupt but smooth. Therefore, transition regions 5 between each of the bridges 3, i.e. on either side of the bridge, and the resonant masses exhibit a concave shape in the plane of the two-dimensional array, respectively. These transition regions 5 of concave shape may also be termed as concave edges 5. The curvature of said concave edges 5 may be optimized, thereby increasing the reliability of the band gap of the manufactured device. Often, a smaller radius may be better for vibration isolation, but not necessarily for fabrication. Thus, typically a tool having a small or the smallest radius is chosen, which at the same time still satisfies the time constraint of the fabrication when using the radius of this tool. In other words, for practical reasons, the radius of curvature of the concave edges 5 correlates with the choice of the tools for the manufacture of the resonant masses. The curvature of said concave edges 5 may be chosen as small as possible while still satisfying the fabrication constraints. Further, the bridges 3 have a predefined width c in the x direction, i.e. a direction perpendicular to the thickness direction z, respectively. Further the bridges 3 have a predefined length d in the other direction, here y, in the x-y plane, i.e. a direction perpendicular to the thickness direction z as well as perpendicular to the other in-plane direction, here x. Alternatively, the cross section c*e may be predefined in order to satisfy a stability criterion during the fabrication, or else the factor c*e/d may be predefined in order to satisfy e.g. conditions on the thermal conductivity).

The resonant mass 1 together with its corresponding bridges 3 as shown in Fig. 1 is highly symmetric.

Figure 2 depicts a schematic stereoscopic side view of the unit cell 100 of Fig. 1 according to the present disclosure. In Fig. 2A, same elements as already shown in Fig. 1 are denoted by the same reference signs and will not be described, again, for Fig. 2A. As indicated already for Fig. 1, the resonant mass 1 extends in the thickness direction, i.e. z-direction such that the resonant mass 1 has the shape of a right parallelepiped, which may also be termed as cuboid. Also, the concept of rounded, i.e. convex edges 7 of the resonant mass 1 is shown in Fig. 2A. Fig. 2A also shows the concept of concave transition regions, i.e. concave edges 5 for the transition of each of the bridges 3 to the resonant mass 1, respectively. It should be noted, however, the following detail. The resonant mass 1 as shown in Fig. 2A has a height or thickness f in the thickness direction. In other words, loosely speaking, f is the thickness of the resonant mass 1. However, in Fig. 2A it is shown that the bridges 3 do not have the full height / thickness f of the resonant mass 1. Instead, each of the bridges 3 are recessed with respect to the thickness f of the resonant masses 1, respectively. Here, the height of the bridges is denoted by e whereas a recess of the bridges 3 is denoted by g. Therefore, the height of the bridges 3 is reduced by the value of g, i.e. its magnitude, when compared to the thickness of the resonant mass 1, in other words g = f - e. The reduction, i.e. the recess g in the thickness direction may be in the range of 5 to 95% of the thickness f of the resonance masses 1, meaning that the resulting thickness e of the respective bridge 3 is only in the range 5 - 95% of the thickness f of the resonant mass 1. Further, due to the symmetry, the resonant mass 1 has two surface planes perpendicular to the thickness direction z. One of the surface planes has a normal parallel to the thickness direction z. This surface plane or surface area may be termed SF. The other one of the surface planes has a normal antiparallel to the thickness direction and may be termed SB. As is evident from Fig. 2A, whereas for illustrational purposes SF is shown "at the top" and "SB" is indicated "at the bottom", these roles of SF and SB, i.e. of the planes may be reversed. The recess g of the bridges 3 is in the range of 5 to 95% of the total thickness f as measured with respect to the top side, SF, i.e. only one of the two surface planes. Alternatively, this could be measured from the bottom side, SB, instead. Whereas in Fig. 2A it is shown to be surface area SF. It may be possible however to recess the height, i.e. the thickness, e, of the bridges 3 with respect to both surface planes, i.e. SF and SB, respectively. In that case, the bridges 3 would be centered around the center point of the respective four faces F1, F2, F3, F4 of the resonant mass 1, said faces F1, F2, F3 and F4 each facing outward and being located perpendicular to the thickness direction z. This is also depicted in Fig. 2B, in which the resonant mass 1 is shown in a simplified manner without the bridges 3, thereby further describing the faces F1, F2, F3, and F4, and also the faces SF and SB of the resonant mass 1. It should be noted; however, that Fig. 2B is meant as a simplification for explanatory purposes. In the manufacturing process, cf. Fig. 7, the resonant masses 1 are not manufactured separately from the bridges 3, but rather the unit cell 100 is manufactured in one piece. Thus, bridges 3 as shown in Figs. 1 and 2A, respectively are not meant to be glued or otherwise fixed to the resonant masses 1 only after a manufacturing step for the resonances.

Further, the thickness direction of the resonant mass 1 as shown in Figs. 1 and 2A is parallel to a principle axis of inertia of the resonant mass 1 or likewise of the unit cell comprising both the resonant mass 1 and the bridges. Thus, the resonant mass 1 and thereby the unit cell may be at least partly rotationally symmetric around said principle axis of inertia of said respective resonance mass or likewise of the unit cell. The resonant mass thus extends along said principle axis with a predefined thickness.

The resonant mass 1 and the bridges 3 as shown in Figs. 1 and 2A are monolithic and thus are made of one of the materials in the following list: aluminum, copper, stainless steel, invar, brass, nickel, titanium, sapphire or silicon. The resonance masses 1 may comprise a width of 1 to 100 mm for the sides a and b, respectively, corresponding to the respective lengths in the x- and y-directions, respectively, cf. Figs. 1 and 2A. Further, the thickness f of the resonant mass 1 may be of the order of 1 to 100 mm, the radius of concave curvatures of the concave edges 5 may be in the range of 0.5 to 10 mm. Further, the radius of convex curvatures of the convex edges 7 may be in the range of 0 to 50 mm, whereas the width, c, of the bridges may be in the range of 0.5 to 25 mm, the length, d, of bridges may be in the range of 1 to 50 mm, cf. Figs. 1 and 2A.

As already indicated, the unit cells 100 as described with respect to Figs. 1 and 2A serve as the base structure for building an array. An array 200 of repetitive, mostly identical structures, i.e. unit cells forming a phononic crystal, is shown in Fig. 3. In other words, the array 200 shown in Fig. 3 already represents a phononic crystal within the meaning of the present disclosure. Figure 3 depicts a schematic top view of a phononic crystal 200 including an array of unit cells 100 according to the present disclosure. The unit cells 100 shown in Fig. 3 are of the kind described in Figs. 1 and 2A. The unit cells 100 form the array 200 and thereby form the phononic crystal 200 are each identical. The array, i.e. the phononic crystal as shown in Fig. 3 is largely a two-dimensional structure, the third dimension corresponding to the thicknesses f of the unit cells 100, which however is the same for each of the unit cells 100. Figure 3 shows that each resonant mass 1 has four bridges 3 connecting to other bridges 3 of other resonant masses 1, i.e. other unit cells 100, respectively. It should be understood that a different number of bridges may be chosen and the underlying geometric pattern may have a different structure than a rectangle or a quadratic shape, e.g. a six-fold symmetry or honeycomb structure may also be possible.

Following the disclosure of Fig. 3, Figure 4A shows a vibration isolation system 250 with the phononic crystal 200 of Fig. 3 according to the present disclosure. For pragmatic reasons the array, i.e. the phononic crystal 200 of Fig. 3 should have an outer handling or support frame 9 as shown in Fig. 4A. Said support frame 9 may also have several fixation holes 13, e.g. by screws or the like. The number and placement of the fixation holes 13 is optional and might depend on the application. Further, in view of the overall task of vibration damping, the phononic crystal 200 of the vibration isolation system 250 typically will have one or more mounting points for samples, on which a user may fix said samples to be vibrationally isolated from an environment. In Fig. 4A a sample mount 11 is placed right in the middle of the array of the phononic crystal 200, replacing the unit cells 100 in that area.

Figure 4B, 4C and 4D show slight modifications of a vibration isolation system 250 of Fig. 4A using the phononic crystal according to Fig. 3, when compared with Fig. 4A.

Fig. 4B discloses the same elements as depicted in Fig. 4A; however, instead of having one support structure, that surrounds the entire array, it has two separate support structures 29 on two ends of the phononic crystal 200. The sample mount 21 of Fig. 4B may be the same as in Fig. 41. However, the sample mount 21 of Fig. 4B does not need to be in the middle of the array but can be located elsewhere within the array to accommodate for geometrical constraints of the application. Best results of the vibration isolation are achieved for a location of the sample mount close to the center of the array.

Figure 4C shows a further modification 300 of a vibration isolation system using the phononic crystal according to Fig. 3, when compared with Fig. 4A and 4B. In more detail, Fig. 4C discloses a first array 201 of unit cells 100 as well as a second array 203 of unit cells; these arrays 201 and 203, respectively, being connecting by a holding support 17 and a sample mount 15. It should be noted that array 201, 203 and holding support 17 and sample mount 15 are manufactured from one piece of material. Here, the support is not provided in the form of a frame but is only located at one end of the arrays. Two arrays 201, 203 are used instead of a single one to increase the structural stability of the vibration isolation.

Figure 4D shows another modification 301 compared to Figure 4C, employing a planar geometry which can be fabricated from a single side. Here only a single array 201 is used to connect the holding support 17 and the sample mount 15. The holding support 17 and the sample mount 15 are designed identically and can thus reverse their functionality.

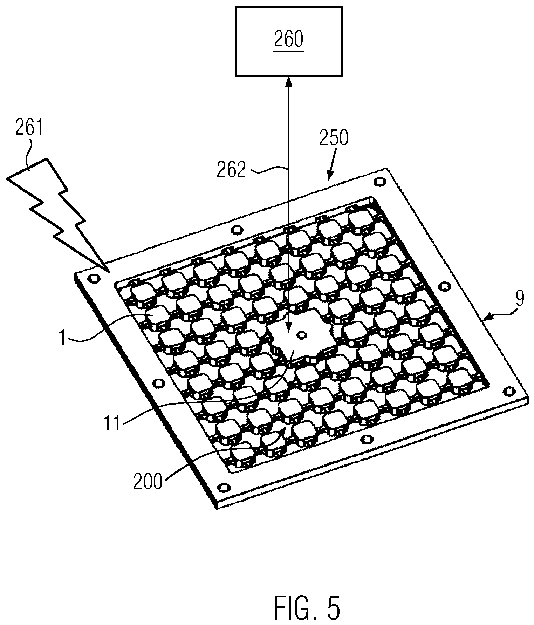

Figure 5 shows a schematic depiction of vibration isolation measurement using the vibration isolation system 250 of Fig. 4A. Here again same elements are denoted by same reference signs as in Figs. 1 - 4. Fig. 5 illustrates excitation of the vibration isolation system 250 by some external excitation energy such as sound or external vibration or the like. It should be understood that isolation of the system 250 typically works in a certain frequency range of the vibrational spectrum according to the predetermined parameters of the system. A sample may be fixed to the sample mount 11 or the sample mount 11 may be used as a sample, e.g. by coating the sample mount 11 with some light reflecting material. Fig. 5 then shows a sensor / light detector 260 capable of emitting light onto the sample on the sample mount 11 - or likewise the reflective sample mount itself, and further capable of detecting the light reflected from the sample mount 11. Thereby, vibrational oscillation patterns still applied to the sample mount 11 will be converted into light to be measured by the sensor 260. In a more advanced setup, an interferometric setup may be used (not shown).

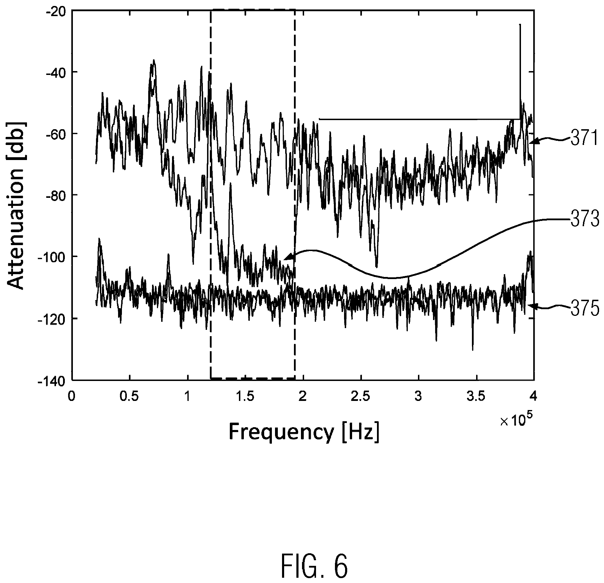

Figure 6 presents results of vibration isolation measurement for vibration isolation system 250 as shown in of Fig. 5. In a simplification of the results, Fig. 6 shows the frequency in units of 10⁵ Hz on the abscissa, whereas the attenuation in units of dB is given on the ordinate. Three curves are shown, a first curve / data 375 indicating the results without the vibration isolation system 250, a second curve / data 373 indication the results when applying the vibration isolation system and a third curve / data 375 indicating the background of the measurement system. Fig. 5 thus clearly shows a suppression of vibrational modes for the frequency range between roughly 100 kHz to 200 kHz for the test using the vibration isolation system 250 according to the present disclosure. In other words, in the designated area of 120 kHz to 200 kHz, see vertical dashed lines, there is a significant drop in the vibration transmission. Except for one noticeable but localized resonance of known origin at 140 kHz, cf. the spike at about 140 kHz, a 30 dB to 40dB vibration isolation is visible from these spectra. For the example shown, this spike indicates the resonance frequency of the sample and sample mount, which for this example is of interest

Before the manufacturing according to the present disclosure takes place however, the usual standard process known in the art should be briefly revisited.

Said standard process would be similar to the following. The process would design nearly idealized structures while including sharp corners and/or sharp edges. The fabrication of unit cells might include 3D printing, and manual assembly. Tests of the parameters of the system such as band gap, isolated frequency band, etc. may show results showing arbitrary parameter shifts, and deteriorated performance. Results in differences between simulated and fabricated device parameters. Isolation range may be shifted and reduced. A predictable device performance may be only available for geometries of whole arrays. Overall, the standard process may require multiple iterations of the manufacturing process, thereby shifting band gaps as desired. It may require high aspect ratio production techniques, composite designs with manual assembly, and it may require arbitrary fabricated parameters that are mostly acceptable only for roof-of-principle experiments and certain sensor applications, e.g. measuring a dispersive shift in microfluidics relies only on relative frequency measurements. An iterative design process may still be ok for certain large production volume applications. However, in general, this process needs to be improved.

Instead, the process according to the present disclosure aims at providing a simulated and then a fabricated device for which parameters match closely. A predictable device performance for complex geometries for full band gap devices should be provided, ideally in very few or even a single iteration. This then may be following by standard production techniques that may be faster, and with lower aspect ratio than the above-mentioned standard process. It should involve monolithic devices and said monolithic devices should exhibit predictable parameters in the production that are required for vibration isolation of specific frequencies, for rapid prototyping by standard means towards full bandgap designs. Thus, design of fabrication-adapted structures, i.e. by means of simulation of band diagram and band gap of unit cells, including employing design rules adapted to production technique, will aid the fabrication of unit cells involving standard fabrication techniques, e.g. CNC milling. The verification of parameters of the devices, e.g. width of band gap, isolated frequency band, will lead towards achieving better predictable parameters, and a higher performance of the device.
The manufacturing process including its preparation may be described as follows:

### Preparation

Step 1.) In a first step, it should be decided on a crystal structure, i.e. an underlying symmetry that should be used for the unit cells, i.e. for the phononic crystal. For example, this may be a cubic symmetry. In more detail, an example may be one of Bravais lattices. Each lattice/crystal structure has specific properties. A cubic lattice, i.e. a D4 point group, may be a good starting point due to its simplicity.
Step 2.) In a second step, it should be decided on material thickness, e.g. a thickness T in the thickness direction which is the thickness f in Figs. 1 - 7, may be chosen to be T=f=3mm, of the phononic crystal.
Step 3.) In a third step, it should be decided on tools to use for the manufacturing. Since these are milling tools, the choice of tools will define the concave radius of the concave edges, e.g. Ri=1.5 mm, where Rᵢ is the concave radius. In case smaller radii are available, the necessary overall machining time should be taken into account. Usually there is some predefined target machining time or maximum time allotted or allowed for the machining process, which should not be exceeded. This means for the respective machine, the metal removal rate for the respective tool in combination with the machine used for milling needs to be taken into account. This should then influence the decision on which may be the smallest radius or radii to be used such that said maximum time allowance is respected. In case this condition is fulfilled for all milling tools and / or cutting bits, the respective smallest milling tool and /or cutting bit may be chosen.
Step 4.) In a fourth step, it should be decided on one-sided or two-sided fabrication. Typically, one-sided fabrication would be chosen. For two-sided fabrication, the work piece needs to be flipped at least once during fabrication. One side fabrication has the effect that the bridges, cf. the bridges 3 in Figs. 1 - 5, are recessed only from top side of resonant masses. Otherwise, if the work piece is flipped at least once during fabrication, it may be possible to manufacture recesses of the bridges from both sides. Here one side or both side refer to the faces SF and SB as described with respect to Figs. 1, 2A, and 2B, respectively. For example, by two-sided fabrication, it may be possible to achieve slightly larger band gaps, i.e. slightly better vibration isolation. Thus, this step, i.e. manually flipping, is an additional, optional step, which as such costs handling as well as machining time. Thus, it may only be applied in case the production may be accomplished within the overall time allowed for the production of the device. In addition, some designs may exist in which this step may not be possible for geometrical reasons and thus this step is omitted.
Steps 2, 3, and 4 typically each take into account the available tools and machining. In case more than one thickness T is available, meaning that a certain range of thicknesses would be possible, the thickness T may be used as an additional free parameter for step 7, see below.
Step 5.) In a fifth step, one or more stability criteria should be chosen, i.e. an application specific restriction. A stability criterion means, for example, that a width or height of a bridge and thereby of the entire device should not be reduced to such an extent that the device becomes weak at connections between bridges and might even break at such locations. Thus, possible stability criteria may be the width of the bridge, Wb, where Wb equals c in Figs. 1 and 2A, i.e. Wb=c; further the height of the bridge, Wt, which is denoted by e in Fig. 2A, i.e. Wt=e. The stability criterion may be pre-defined based on the respective application. For example, for a cryostat, a specific thermal conductivity may be required. Said specific thermal conduction then may determine the stability criterion. In other words, the ratio c*e/d should not be lower than a predefined number.
Step 6.) In a sixth step the target frequency or target frequency range for vibrational frequencies should be chosen. This target frequency, F, or range of target frequencies, FL - FR, represents the frequency F or frequencies between a lower frequency FL and an upper Frequency FR, which should be isolated. The frequency or range of frequencies to be isolated may be pre-defined based on the respective application. This might be the resonant frequency of a sensor that is intended to be vibrationally damped or even isolated.

### Modelling, Simulation and Calculation

Step 7.) Based on the preparatory steps 1)- 6), the process proceeds by creating model of a unit cell, such as the unit cell 100 of Figs. 1 - 4. Thus, the idea is that pattern that is repeated to create the 2D array may be later simply translated in the 2D plane. The model of the unit cell may be coded and stored on a computer program product. This step should then define the free parameter for convex radius of corners / edges, Rc, length of bridges, L=d, i.e. L equals d in Figs. 1 and 2A, respectively. Further it should define the so called dimension of resonant masses D, for example side length for cubic geometry, where D equals the length of the sides a and b as described with respect to Figs. 1 and 2A, i.e. D=a=b.
This may be achieved by using, for example, a commercial finite element modelling, FEM, code such as COMSOL Multiphysics®, or free codes like Code_Aster, or own codes written in proprietary languages such as MATLAB®, or free languages such as Python etc.
Step 8.) The following step should include simulation of a band gap of an infinite lattice, for example using finite element simulation with Floquet boundary conditions. This should be followed by simulating a band diagram of the irreducible Brillouin zone that represents the resonance frequencies corresponding to the wave numbers in the 2D reciprocal space. Here, the lower band edge (FL) is the highest frequency below the band gap; the upper band edge (FU) is the lowest frequency above the band edge.
Step 9.) The following step should then involve calculation of a figure of merit M with respect to the band structure, in order to quantify the isolation per unit cell, for example a possible figure of merit M may be
   M=max(FL-F, F-FU), or
   more sophisticated, in pseudo code:
   Mi = max(FL-F, F-FU); If Mi>0; M=Mi; else; M=-sqrt((FU/2-FL/2)²-(F-FU/2-FL/2)²); where max refers to the optimization process, i.e. maximizing M w.r.t. the parameters given in parentheses.
Step 10.) Following step 8, the next step should use a minimum search algorithm to minimize the selected figure of merit M by varying the free parameters specified above, i.e. Rc, L, D. The minimization may involve well-known minimization techniques such as, for example gradient descent', also known as "steepest descent", or other 'genetic' algorithms. For example, gradient descent often yields satisfactory results and usually is a good starting point.
The steps 7 to 9 may be repeated until a minimum figure of merit M has been found. This usually converges quickly. For example, the number of iterations may be in the range of 10 to 100.

The above-described steps 1 - 10) may be slightly modified according to the following alternatives A and B, respectively:
Alternative A) For steps 1-10, a different set of free parameters may be used. These alternative free parameters may be Ri, Wb, Tb, Rc, L, D, for the optimization, cf step 7 and 10. In this alternative, more parameters are free, i.e. the simulation may not converge as quickly. That means, if considerable additional computational effort is acceptable for small additional gains in vibration isolation, this alternative should be chosen.
Alternative B) In yet another alternative approach, steps 1-4 and 6-10 are performed as described above, but for step 5), it should be selected a different criterion. Thus, it may be defined a criterion with respect to thermal conductivity / stability. Said criterion may be formulated as S=Wb*Tb/L. Then, Ri, Wb, Rc, L, D, may be used as free parameters for optimization in step 7 and 10. Thus this is one free parameter less than for alternative A). Instead, Tb may be calculated as Tb=S*L/Wb. This alternative is specific for thermal conductivity, rather than stability of the device during production. That means if the thermal conductivity is important, this alternative should be chosen.

After step 10) according to one of the three alternatives described above the process may then continue as follows.

### Machining

Step 11.) Optionally: a sample mount may be geometrically defined in accordance with fabrication constraints, see steps 2 - 5, above. Said sample mount which corresponds to the sample mount of Figs. 4A and 5 may be connected to the 2D array with bridges of same size, as defined by Wb, Tb, L. This may then correspond to the unit cells of Figs. 1 and 2A. In particular, the sample mount may be located in the center of the phononic crystal. Additionally or alternatively, one or more sample mounts may be located on one or more ends of the two-dimensional array, i.e. the sample mount may be connected with in plane concave corners / edges having radius Rᵢ. Thus the size of sample mount, i.e. its width, length, and thickness, should be varied such that localized resonances are as far away as possible from target frequency F. The minimization may include gradient descent or a genetic algorithm for minimizing.
Step 12.) Eventually, it should be generated a model of the complete device, including sample mount and also including a support frame, cf. Figs. 4A and 5, said support frame having mounting holes in the support frame and/or having one or more sample mounts, as shown in Figs. 4A and 5. Said model of the complete device, i.e. the device as shown in Figs. 4A and 5 may be stored on a computer program product and may be computer readable. Said model may then be used for drilling and milling material using a CNC machine.
Step 13.) Thus, the next step should include using a plate of a selected material of sufficient size, from which the device should be fabricated, cf. Fig. 7. This should include drilling /milling of mounting holes.
Step 14.) In the next step, an auxiliary block should be used, and holes should be tapped into the auxiliary block and the material from step 13 should be screwed to the auxiliary block.
Step 15.) In the next step, the auxiliary block should be mounted together with the plate of material in the CNC milling machine.
Step 16.) Actual milling should then take place, at least on one side of the device. If necessary, cf. Step 4, the material and the plate should be unscrewed, then flipped, re-screwed again to the auxiliary block and milling should continue on the other of the device.
Step 17.) The material, cf. Fig. 7, should then be unscrew and tested for vibration isolation, e.g. using a setup similar as shown in Figs 5 and 6. If the parameters are out of a specified range, the material parameter may be adapted until the simulation agrees with observed isolation band. Eventually, steps 1-16 may be repeated with new parameters.

Summarizing, a method of manufacturing a phononic crystal have a periodic array of identical unit cells with local resonances has been described. The phononic crystal may be used within a vibration isolation system in order to create a band gap, thereby preventing propagation of sound at these frequencies. The vibration isolation system may include a support frame on the outside allows for rigid mounting. The phononic crystal comprises an array of identical unit cells makes bandgap that is a stop band for vibrations within a certain frequency range that prevents their transmission. A sample mount in the middle of the vibration isolation device isolates vibrations, in a specific frequency range, of the environment to which the frame is mounted. A set of steps and rules has been defined to allow for manufacturing a monolithic phononic crystal vibration isolation devices with standard machining techniques, e.g. CNC mills, and simultaneously increase the bandgap. These include the curvature of concave edges, thereby increasing the reliability of the band gap of the manufactured device. These also include the curvature of the convex edges thereby optimizing the width of the band gap. These further include the cross section of the bridges, i.e. thin parts of the unit cells, thereby optimizing the width of the band gap. This provides then a reliable and rapid production of vibration isolation devices with large band gaps. The devices are monolithic and therefore may conduct heat very well; remain stable in temperature; have very little position drift over time; and are robust against gravity effects when oriented in the gravitational field.

### List of Reference Signs

- 1: resonant mass
- 3: bridge
- 5: concave edge
- 7: convex edge
- 9: support frame
- 11, 21: sample mount
- 13: fixation holes
- 15: rear holding support
- 17: front holding support
- a, b: sides of rectangle / square
- e: height of bridge in thickness direction
- f: height=thickness of resonant mass in thickness direction
- g: recess of bridge, g=f-e, in thickness direction
- c: width of bridge
- d: height of bridge in direction perpendicular to thickness direction
- 100: unit cell
- 200: array of unit cells
- 201: array of unit cells
- 203: array of unit cells
- 250: vibration isolation system
- 251: vibration isolation system
- 252: vibration isolation system
- 261: excitation beam
- 260: light detector / sensor
- 262: laser beam
- 300: manufacturing intermediate piece
- 371: damping of vibrational spectrum without vibration isolation system
- 373: damping of vibrational spectrum with vibration isolation system
- 375: background noise of vibrational spectrum
- SF: top surface plane / top face of resonant mass
- SB: bottom surface plane / bottom face of resonant mass
- F1, F2, F3, F4: side faces of resonant mass

## Claims

1. Monolithic phononic crystal (200) for vibration isolation comprising:
a two-dimensional array of a plurality of resonant masses (1), said resonant masses (1) being connected by bridges (3);
wherein transition regions (5) between bridges (3) and resonant masses (1) have a concave shape in the plane of the two-dimensional array, respectively;
wherein the resonant masses (1) each have convex edges (7) in the plane of the two-dimensional array; and
wherein the bridges (3) are recessed with respect to the thickness of the resonant masses (1).

2. Monolithic phononic crystal according to claim 1; wherein the resonant masses (1) are rectangular-shaped parallelepipeds.

3. Monolithic phononic crystal according to claim 1 or 2; wherein the resonant masses (1) are at least partly rotationally symmetric around a principle axis of inertia of the respective resonance mass; and the resonant masses (1) each extending along said principle axis with a predefined thickness.

4. Monolithic phononic crystal according to one of claims 1 - 3, wherein each resonant mass of the plurality of resonant masses (1) is connected by four bridges (3) with four other resonant masses (1), respectively.

5. Monolithic phononic crystal according to one of claims 1 - 4, wherein the height of the bridges (3) in the thickness direction is in the range of 5 to 95% of the thickness of the resonance masses, respectively.

6. Monolithic phononic crystal according to one of claims 1 - 5, made of one of aluminum, copper, stainless steel, invar, brass, nickel, titanium, sapphire or silicon, wherein the resonance masses comprise a width in the range of 1 to 100 mm, a thickness in the range of 1 to 100 mm, a radius of concave curvatures in the range of 0.5 to 10 mm, radius of convex curvatures in the range of 0 to 50 mm, width of the bridges (3) in the range of 0.5 to 25 mm, length of bridges (3) in the range of 1 to 50 mm.

7. Vibration isolation system (250, 255, 300, 301) comprising a monolithic phononic crystal (200) according to one of claims 1 - 6.

8. Vibration isolation system (250) according to claim 7, further comprising:
a sample mount (11) located in the center of the phononic crystal (200); and
a support frame (9) surrounding the phononic crystal (200) and made from the same material as the phononic crystal (200).

9. Vibration isolation system (255) according to claim 7, further comprising:
a plurality of sample mounts (21) located within the phononic crystal (200); and
a plurality of support structures (29) at one or more ends of the phononic crystal (200) and made from the same material as the phononic crystal (200).

10. Vibration isolation system (300, 301) according to claim 7, further comprising one or more sample mounts (15) located on one or more ends of a plurality of two-dimensional arrays (201, 203), respectively, and a support mount (17) connected to one or more other ends of the arrays made from the same material.

11. Method of manufacturing a monolithic phononic crystal (200), the method comprising the steps of:
i) providing a pre-defined two-dimensional array of a plurality of resonant masses (1), said resonant masses (1) being connected by bridges (3); and transition regions (5) between bridges (3) and resonant masses (1) have a concave shape, respectively; wherein the resonant masses (1) each have convex edges (7) in the plane of the two-dimensional array; the bridges (3) being recessed with respect to the thickness of the resonant masses (1);
ii) measuring vibration isolation parameters of said pre-defined two-dimensional array of the plurality of resonant masses (1), and extracting the measured vibration isolation parameters;
iii) comparing the extracted measured vibration isolation parameters with pre-defined target isolation parameters;
iv) starting from the measured vibration isolation parameters, optimizing one or more of the following parameters: radius of curvature of the concave regions (5), radius of curvature of the convex regions (7), length of the bridges (3), size of the cross-section of the bridges (3), thickness of the resonance masses (1), recess of the bridges (3) with respect to the thickness of the resonant masses (1);
v) providing modified parameters of a modified two-dimensional array of a plurality of modified resonant masses (1) and manufacturing said modified two-dimensional array;
vi) verifying (measuring) the parameters of the modified two-dimensional array; and in case the parameters are not within a predefined range of the respective target parameters, returning to step iv) else vii) extracting the modified parameters for production.

12. The method according to claim 10, further comprising computer numerical control, CNC, milling of the monolithic phononic crystal according to the extracted modified parameters of step vii).

13. The method according to one of claims 10 or 11; wherein the resonant masses (1) are rectangular-shaped parallelepipeds.

14. The method according to one of claims 10 - 12; wherein the resonant masses (1) are at least partly rotationally symmetric around a principle axis of inertia of the respective resonance mass (1); and the resonant masses (1) each extending along said principle axis with a predefined thickness.

15. The method according to one of claims 10 - 13, wherein each resonant mass (1) of the plurality of resonant masses (1) is connected by four bridges (3) with four other resonant masses (1), respectively; in particular wherein the height of the bridges (3) in the thickness direction is 5 to 95% of the thickness of the resonance masses (1).
